# EUROPEAN PATENT SPECIFICATION

(11) **EP 1 103 105 B1**
(45) Date of publication and mention of the grant of the patent: **12.08.2009**
(21) Application number: 00931656.3
(22) Date of filing: 01.06.2000
(51) Int. Cl.: H04B 7/005

(54) **APPARATUS AND METHOD FOR RADIO COMMUNICATIONS TRANSMISSION POWER CONTROL**
VORRICHTUNG UND VERFAHREN ZUR RADIOKOMMUNIKATIONS-SENDELEISTUNGSREGELUNG
APPAREIL ET PROCEDE POUR REGULER LA PUISSANCE D'EMISSION DE RADIOCOMMUNICATIONS

(30) Priority: 03.06.1999 JP 15677099
(43) Date of publication of application: 30.05.2001
(73) Proprietor: Panasonic Corporation, Kadoma-shi Osaka 571-8501 (JP)
(72) Inventor: ICHIKAWA, Yasufumi, Yokohama-shi Kanagawa 241-0821 (JP)
(74) Representative: Grünecker, Kinkeldey, Stockmair & Schwanhäusser Anwaltssozietät
(86) International application number: PCT/JP2000/003568
(87) International publication number: WO 2000/076084

(56) References cited:
- EP-A- 0 682 417
- EP-A- 0 682 418
- EP-A- 0 696 857
- EP-A- 0 836 287
- EP-A- 0 897 225
- JP-A- 09 275 373
- US-A- 5 574 984

## Description

### FIELD OF THE INVENTION

The present invention relates to a radio communications apparatus used for a mobile communications system, etc. including a portable telephone set, etc. which performs mobile communications, a method for the radio communications apparatus to control transmission power between a mobile station and a base station, etc. in the mobile communications system, and a computer-readable recording medium which stores the transmission power control method.

### BACKGROUND OF THE INVENTION

In a mobile communications system of the Code Division Multiple Access (CDMA) using the spread spectrum technology, a single frequency bandwidth is shared by a plurality of users. Thus a so-called problem of strong-field channel/weak-field channel may easily arise that a high-power signal masks a low-power signal, resulting in degradation of the line quality of a local station caused by a signal from another station appearing as an interference wave. In such a mobile communications system, a transmission power control technology has been studied for reducing interference between communications channels to upgrade the frequency use efficiency, by controlling the transmission power of a local station depending on the distance between a base station and a mobile station in transmitting information and by holding constant the power of a signal arriving at the base station.

As a transmission power control system, in particular, there is known a transmission power control system via a closed loop to respond to an interference signal which instantaneously varies. Japanese patent publication H08-032513 discloses an example wherein transmission power control is made according to the control amount corresponding to a preset number of successive reception times when the same transmission power control bit is successively received in order to respond to a sudden variation in the reception power on a communication channel. The CDMA system requires, in particular, a wide-dynamic-range (for example 70 to 80dB), high-linearity transmission power control. The wide-band CDMA (W-CDMA) system requires a high accuracy of transmission power in high-power operation, thus a higher-accuracy transmission power control is requied.

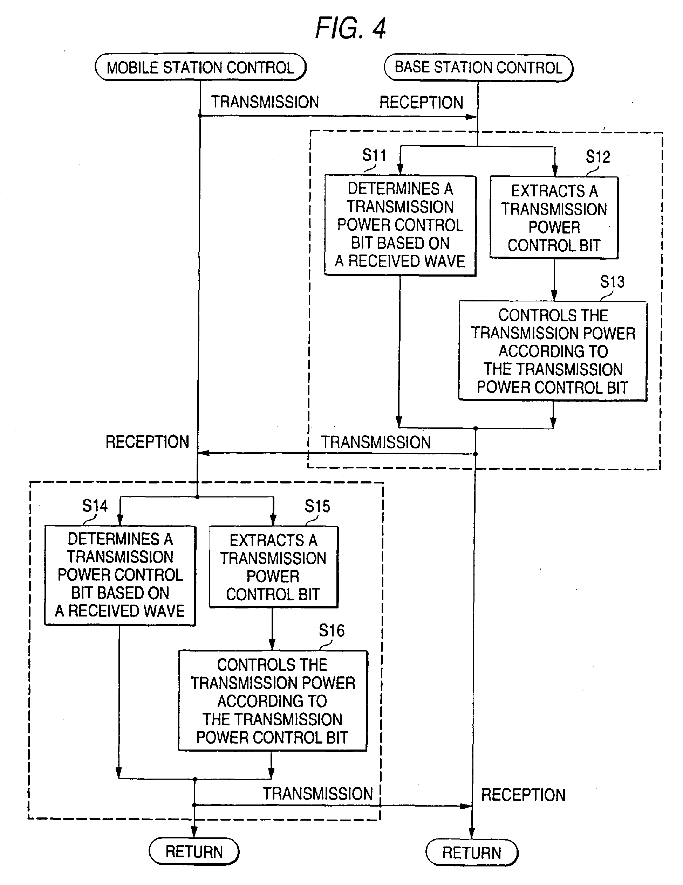

Fig. 4 is a flowchart of an example of a conventional transmission power control system via a closed loop. In case a base station and a mobile station communicate with each other, the base station determines a transmission power control bit based on the reception power of a received wave or desired wave from the mobile station (S11) , inserts the transmission power control bit in a transmission signal, and transmits this signal to the mobile station. The mobile station receives the signal from the base station, extracts the transmission power control bit from the received signal (S15) and controls the transmission power of the mobile station according to the instruction in the transmission power control bit (S16).

Similarly, the mobile station determines a transmission power control bit based on the reception power of a received wave or desired wave from the base station (S14), inserts the transmission power control bit in a transmission signal, and transmits this signal to the base station. The base station receives the signal from the mobile station, extracts the transmission power control bit from the received signal (S12) and controls the transmission power of the base station according to the instruction in the transmission power control bit (S13).

By performing such transmission power control, reception power at the base station and the mobile station can be held substantially constant, irrespective of the location of the mobile station.

In order to perform high-accuracy transmission power control by way of the aforementioned conventional transmission power control method, the transmission power control range corresponding to the value of the transmission power control bit (one unit) must be made small. There is, however, a problem that a smaller transmission power control range cannot respond to a sudden variation in reception power, resulting in lower accuracy of transmission power control.

US-A-5,943,610 discloses a transmission power control method with dynamic step value depending on a location of a mobile terminal in a radio zone. The disclosed mobile terminal detects an intensity of reception field strength of a radio signal transmitted by a radio base station. The radio base station, which has received and measured the radio signal quality transmitted by the mobile terminal, instructs the transmission power control information to the mobile terminal in accordance with the measured radio signal quality.

EP-A-0682418 discloses a transmission power control method for a CDMA system including the steps of calculating an actual Signal-to-Interference Ratio of a desired signal; deciding whether the actual SIR is greater than a predetermined reference SIR which satisfies a predetermined communication quality; forming a transmission power control bit on the basis of a result of deciding; inserting the transmission power control bit periodically into a forward frame, which steps are performed at the base station, and steps of calculating reverse transmission power control in accordance with transmission power control bit in the forward frame.

### DISCLOSURE OF THE INVENTION

The invention aims at providing radio communications apparatus wherein accuracy of transmission power control can be upgraded by changing the transmission power control range depending on the communication state and thus low-power, compact-size apparatus can be provided, a transmission power controlling method for the radio communications apparatus, and a computer-readable recording medium which stores the transmission power control method as defined in the independent method claim.

Preferred embodiment are addressed in independent claims.

### BRIEF DESCRIPTION OF THE DRAWINGS

Fig. 1 is a block diagram showing a configuration of the main section of radio communications apparatus according to the invention.
Fig. 2 is a flow chart showing the procedure for the transmission power control method according to the invention.
Fig. 3 is a flow chart showing the procedure for the transmission power control method according to the invention.
Fig. 4 is a flow chart showing an example of the procedure for the transmission power control method via a conventional closed loop.

### PREFERRED EMBODIMENTS OF THE INVENTION

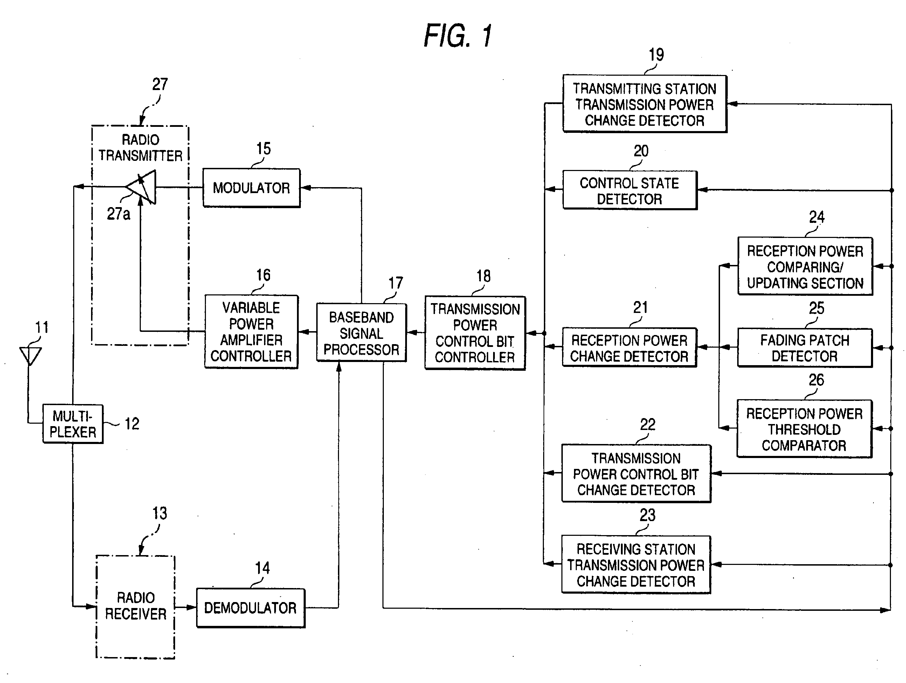

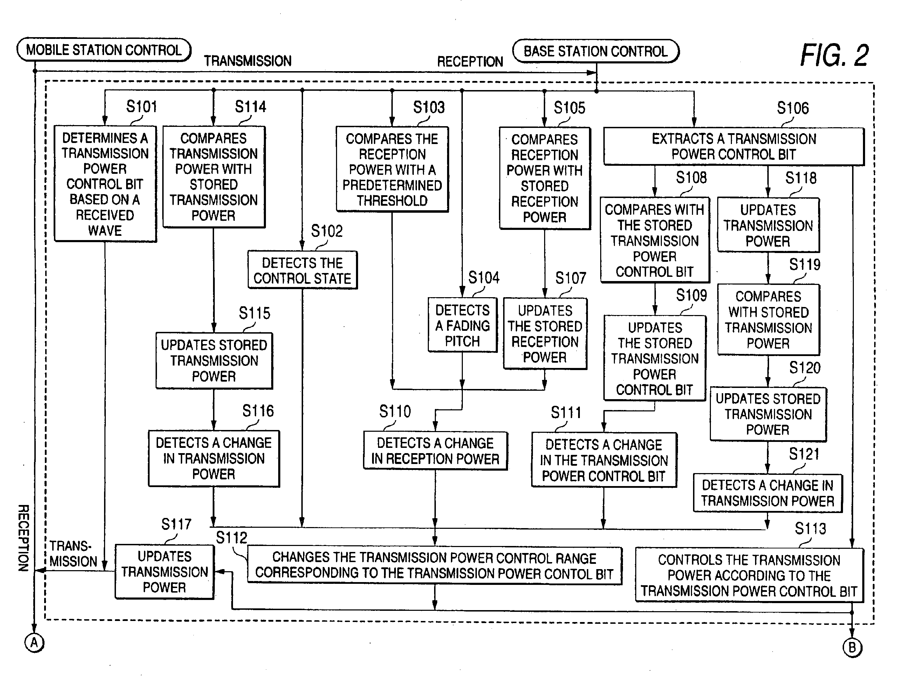

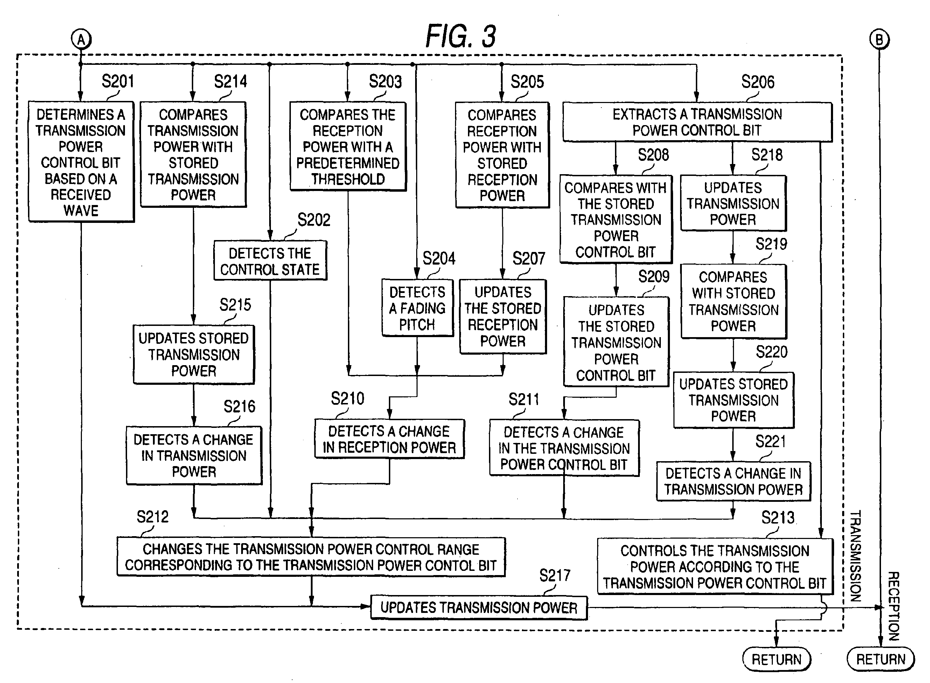

Fig. 1 is a block diagram of the main section of radio communications apparatus according to the invention. Figs. 2 and 3 are flowcharts showing the transmission power control method according to the invention.

Radio communications apparatus according to this embodiment is provided, for example, in a mobile communications device composing a base station or a mobile station of a cellular communications system, and amplifies the power of a signal containing transmission information to transmit the resulting signal to a distant party. A transmission power control method described herein is preferable in a case where high-accuracy transmission power control is required while high linearity is being maintained, such as, in particular, a base station and a mobile terminal such as a mobile telephone set in a CDMA mobile communication system. This embodiment is not limited to a mobile communications device but applicable to other radio communications apparatus which requires similar transmission power control as required.

This example shows only a configuration associated with transmission power control of radio communications apparatus. Any configuration associated with other processing such as circuits and input keys associated with diffusion, inverse diffusion, encoding, decoding, speech transmitting, speech receiving, and control is not shown.

Radio communications apparatus has an antenna 11 for transmitting/receiving radio signals and a multiplexer 12 for isolating a transmission signal from a received signal. The radio communications apparatus has, as a receiving system: a radio receiver 13 comprising a high-frequency amplifier circuit, a local oscillator circuit, and an IF signal amplifier circuit, etc. for high-frequency amplifying the received signal and outputting an intermediate frequency (IF) signal converted to an IF band (intermediate frequency band); a demodulator 14 for converting a received signal to a baseband signal; and a baseband signal processor 17 for processing and decoding a received baseband signal.

The radio communications apparatus has, as a transmission system: the baseband signal processor 17 for processing and encoding a baseband signal to be transmitted; a modulator 15 for modulating a transmission signal to an IF signal; and a radio transmitter 27 for amplifying power of a transmission signal and frequency-converting the transmission signal to an RF band (radio frequency band). The radio transmitter 27 is equipped with a variable power amplifier 27a. The radio transmitter 27 is also equipped with a frequency converter circuit for conversion to an RF band and a transmitter amplifier for output power amplification and so on, which are not shown.

The radio communications apparatus has, as a transmission power control system, the baseband signal processor 17 and the variable power amplifier 27a. The radio communications apparatus has: a variable power amplifier controller 16 for performing amplifier gain control of the variable power amplifier 27a to execute transmission power control; and a transmission power control bit controller 18 as transmission power control range change means for changing the transmission power control range of a transmission power control bit, based on each of the output results from a transmitting station transmission power change detector 19 mentioned later through a receiving station transmission power change detector 23.

The radio communications apparatus has, as a component corresponding to communication state detecting means for generating an input signal to the transmission power control bit controller 18; a transmitting station transmission power change detector 19 as local station transmission power change detecting means for detecting a change in a transmitting station or a local station, based on an output signal from the baseband signal processor 17; a control state detector 20 as control state detecting means for detecting the control state of a local station; a reception power change detector 21 as reception power change detecting means for detecting a change in reception power in a local station; a transmission power control bit change detector 22 as transmission power control bit change detecting means for detecting a change in the transmission power control bit; and a receiving station transmission power change detector 23 as distant station transmission power change means for detecting a change in transmission power in a receiving station or a distant station.

Moreover, the radio communications apparatus has, as a component for generating an input signal to the reception power change detector 21: a reception power comparing/updating section 24 as reception power comparing means for comparing reception power in a local station with a stored previous power value and updating the stored power value; a fading patch detector 25 as fading pitch detecting means for detecting the level variation cycle of a received signal which accompanies fading in the local station; and a reception power threshold comparator 26, as reception power threshold comparing means for comparing reception power in a local station with a predetermined threshold.

In this embodiment, the transmission power control range corresponding to the value of the transmission power control bit (one unit) for power control to be appended to a transmitted signal is changed. This is to upgrade the transmission power control accuracy by performing transmission power control based on the transmission power control range to reflect the communication state on the transmitting side and the receiving side which depends on such factors as a change in communications.

In case apparatus shown in Fig. 1 is a mobile station, the baseband signal processor 17 determines a transmission power control bit based on the reception power of a received wave (desired wave) from a base station, and inserts the transmission power control bit in a transmission signal. The end signal is modulated and frequency-converted to an IF band by the modulator 15, frequency-converted to an RF band by a radio transmitter 27, then transmitted to the base station from the antenna 11 via the multiplexer 12.

A signal transmitted from the base station is received by the antenna 11. The received signal is input to the radio receiver 13 via the multiplexer 12. The received signal is frequency-converted to an IF band by the radio receiver 13, converted to a baseband signal by the demodulator 14, and input to the baseband signal processor 17 for necessary processing. Signals representing the transmission power control bit and reception power level, etc. are then generated.

The transmitting station transmission power change detector 19 detects a change in transmission power in a mobile station or a local station (transmitting station) based on an output signal from the baseband signal processor 17. The control state detector 20 detects the control state of the local station based on an output signal from the baseband signal processor 17. The transmission power control bit change detector 22 detects a change in the transmission power control bit based on an output signal from the baseband signal processor 17. The receiving station transmission power change detector 23 detects a change in transmission power in a base station or a distant station (receiving station) based on an output signal from the baseband signal processor 17.

Moreover, the reception power comparing/updating section 24 obtains a change in reception power in a mobile station by comparing reception power with stored previous power value and updates the stored power value based on an output signal from the baseband signal processor 17. The fading pitch detector 25 detects the level variation cycle of a received signal which accompanies fading in a mobile station based on an output signal from the baseband signal processor 17. The reception power threshold comparator 26 obtains a change in reception power relative to a predetermined threshold in a mobile station by comparing reception power with the predetermined threshold based on an output signal from the baseband signal processor 17. The reception power change detector 21 detects a change in reception power from each of the output results of the reception power comparing/updating section 24, fading pitch detector 25, and reception power threshold comparator 26.

Although the fading pitch detector 25 is generally provided in a mobile communications device such as a cellular portable telephone set, it can be of any configuration provided the level variation cycle of a received signal which accompanies fading can be detected. Detection of the fading can be used to determine the traveling speed of a mobile station for proper control of reception a signal from the base station of an adjacent cell in the case of a handover.

The transmission power control bit controller 18 changes the transmission power control range of the transmission power control bit, based on each of the output results from the transmitting station transmission power change detector 19 through the receiving station transmission power change detector 23 and inputs the resulting signal to the power amplifier controller 16 via the baseband signal processor 17. The variable power amplifier controller 16 controls transmission power to be output from the antenna 11 by performing amplifier gain control of the variable power amplifier 27a based on the transmission power control bit and the changed transmission power control range.

Next, the procedure for the transmission power control method according to the invention will be detailed based on Fig. 2 and Fig. 3.

In this embodiment, the communication state of each of the receiving station and the transmitting station is detected based on the information (1) through (5) below. The transmission power control range corresponding to the transmission power control bit is changed according to the communication state.
(1) Change in reception power in the receiving station
(2) Change in transmission power in the transmitting station
(3) Control state in the reception station
(4) Change in transmission power in the receiving station
(5) Change in the transmission power control bit

(1) Change in reception power in the receiving station is obtained based on detection results of (a) through (c) below.
   (a) Change of the current reception power relative to the reception power under the previous control
   (b) Fading pitch
   (c) Difference of the current reception power relative to the predetermined threshold

At least one of the elements (1) through (5) can be arbitrarily combined with at least one of the elements (a) through (c) and used in the procedure for changing the transmission power control range of the transmission power control bit.

Referring to Fig. 2 and Fig. 3, in case a base station and a mobile station communicate with each other, the base station determines a transmission power control bit based on the reception power of a received wave or desired wave from the mobile station (S101), changes the transmission power control range corresponding to the transmission power control bit (S112), inserts the transmission power control bit in a transmission signal, and transmits this signal to the mobile station. The mobile station receives the signal from the base station, extracts the transmission power control bit from the received signal (S206) and controls the transmission power of the mobile station according to the instruction in the transmission power control bit (S213).

Next, the mobile station compares reception power stored by the mobile station with the current reception power (S205). The mobile station changes the reception power stored by the mobile station to the current value (S207), detects a change in reception power based on the comparison results (S210), and changes the transmission power control range corresponding to the transmission power control bit (S212).

In the processing of step S210, the ratio of change in reception power in the mobile station is detected from the magnitude of the absolute value of comparison results. Thus, the greater the ratio of change in reception power, the more accurate response to a sudden change in reception power is realized by extending the transmission power control range of the transmission power control bit in the processing of step S212, unlike a conventional method using a fixed transmission power control range. This upgrades the transmission power control accuracy.

Next, the mobile station detects the fading pitch of reception power (S204) and detects a change in reception power based on the detection results of the fading pitch (S210). The mobile station then changes the transmission power control range corresponding to the transmission power control bit depending on the detected change in reception power (S212).

In the processing of step S210, the speed of change in reception power in the mobile station is detected from the fading pitch. Thus, same as the foregoing case, the greater the speed of change in reception power, the more accurate response to a sudden change in reception power is realized by extending the transmission power control range of the transmission power control bit in the processing of step S212, compared with a conventional method using a fixed transmission power control range. This upgrades the transmission power control accuracy.

In the processing of step S210, the speed of change and the ratio of change in reception power in the mobile station are detected from the fading pitch detected in step S204 and the magnitude of the absolute value of reception power comparison results detected in step S205. Thus the traveling status of a local station can be assumed from the speed of change and the ratio of change in reception power detected. For example, in case the speed of change is reception power is low and the ratio of change in reception power is large, it can be assumed that the local station is traveling at a low speed in an area where the local station is in the shadow of buildings, etc. in terms of radio waves.

Here, in case reception power decreases, the mobile station is assumed to be traveling into an area where incoming radio waves are weakened by buildings. By reducing the transmission power control range corresponding to the transmission power control bit in the processing of step S212, a sudden increase in transmission power of the base station can be suppressed. As a result, interference by a wave transmitted from the base station to another mobile station can be suppressed, unlike the conventional method using a fixed transmission power control range. This upgrades the transmission power control accuracy. Meanwhile, in case reception power increases, the mobile station is assumed to be traveling out of an area where incoming radio waves are weakened by buildings. By extending the transmission power control range corresponding to the transmission power control bit in the processing of step S212, a sudden decrease in the transmission power of the base station can be realized. As a result, same as the foregoing case, interference by a wave transmitted from the base station to another mobile station can be suppressed, unlike the conventional method using a fixed transmission power control range. This upgrades the transmission power control accuracy.

Next, the mobile station compares reception power with a predetermined threshold (S203). The mobile station detects a change in reception power based on the comparison results (S210). and changes the transmission power control range corresponding to the transmission power control bit (S212).

In the processing of step S210, the mobile station can assume its location based on the comparison results of reception power detected in step S203 and the ratio of the desired wave received signal power to the interference wave power (SIR: Signal-to-Interference Power Ratio). For example, in case reception power is smaller than the predetermined threshold and SIR is small, the mobile station is assumed to be in a weak electric field (area with weak receiving field intensity) such as an area shadowed by buildings. On the other hand, in case reception power is greater than the predetermined threshold SIR is small, the mobile station is assumed to be in a strong electric field (area with strong receiving field intensity and an interference).

Thus, in case the local station is in a weak electric field, a sudden increase in transmission power of the base station can be suppressed by reducing the transmission power control range of the transmission power control bit in the processing of step S212 and initiating the handover of an ongoing call to another base station. As a result, interference by a wave transmitted from the base station to another mobile station can be suppressed, unlike the conventional method using a fixed transmission power control range. This upgrades the transmission power control accuracy. In case the local station is affected by a strong field interference, a sudden increase in transmission power of the base station can be suppressed by reducing the transmission power control range of the transmission power control bit in the processing of step S212. As a result, same as the foregoing case, interference by a wave transmitted from the base station to another mobile station can be suppressed, unlike the conventional method using a fixed transmission power control range. This upgrades the transmission power control accuracy.

Next, the mobile station detects the local control state (S202) and changes the transmission power control range corresponding to the transmission power control bit based on the detection results (S212). In the processing of step S202, the mobile station can detect the control state of the local station transmission power. Thus, in starting the transmission power control, response to predetermined power in a short period is realized by extending the transmission power control range corresponding to the transmission power control bit in the processing of step S212, unlike a conventional method using a fixed transmission power control range. This upgrades the transmission power control accuracy.

Next, the mobile station compares distant station transmission power under the previous control stored by the mobile station with distant station transmission power under the current control (S214). The mobile station updates the value of distant station transmission power under the previous control to the current value (S215), and detects a change in transmission power of the base station based on the comparison results (S216). The mobile station changes the transmission power control range of the transmission power control bit based on the detected change in the transmission power of the base station and the change in reception power detected in step S210 (S212).

In the processing of step S212, the mobile station can assume its traveling status based on the change in the transmission power of the base station and the change in the local station reception power. For example, in case transmission power of the base station increases and local station reception power decreases, the mobile station is assumed to be traveling into a weak electric field such as an area shadowed by buildings. On the other hand, in case transmission power of the base station decreases and the local station reception power increases, the mobile station is assumed to be traveling into a strong electric field such as an area out of a shadow of buildings.

Thus, in case the local station is traveling into a weak electric field, a sudden increase in transmission power of the base station can be suppressed by reducing the transmission power control range corresponding to the transmission power control bit in the processing of step S212 and initiating the handover of an ongoing call to another base station. As a result, interference by a wave transmitted from the base station to another mobile station can be suppressed, unlike the conventional method using a fixed transmission power control range. This upgrades the transmission power control accuracy. In case the local station is traveling into a strong field, a sudden decrease in transmission power of the base station can be realized by extending the transmission power control range corresponding to the transmission power control bit in the processing of step S212. As a result, same as the foregoing case, interference by a wave transmitted from the base station to another mobile station can be suppressed, unlike the conventional method using a fixed transmission power control range. This upgrades the transmission power control accuracy.

Next, the mobile station updates the distant station transmission power to the distant station under the current control based on the transmission power control bit determined in step S201 (S217). The mobile station updates the local station transmission power based on the transmission power control bit extracted in step S206 (S218). Next, the mobile station compares local station transmission power under the previous control stored by the mobile station with local station transmission power under the current control (S219), updates the stored local station transmission power under the previous control to the current value (S220), and detects a change in transmission power of the local station based on the comparison results (S221).

Next, the mobile station compares transmission power control bit stored by the mobile station with the current transmission power control bit (S208), updates the stored transmission power control bit (S209), and detects a change in the transmission power control bit based on the comparison results (S211).

Next, the mobile station changes the transmission power control range corresponding to the transmission power control bit based on the change in transmission power of the local station detected in step S221 and the change in the transmission power control bit detected in step S211 (S212).

In the processing of step S212, the mobile station can assume its location based on the change in the transmission power of the mobile station and the change in the transmission power control bit. For example, in case transmission power of the mobile station increases and the transmission power control bit increases, the mobile station is assumed to be in a weak electric field such as an area shadowed by buildings. On the other hand, in case transmission power of the mobile station decreases and the transmission power control bit decreases, the mobile station is assumed to be in a strong electric field.

Thus, in case the local station is in a weak electric field, a sudden increase in transmission power of the base station can be suppressed by reducing the transmission power control range corresponding the transmission power control bit in the processing of step S212 and initiating the handover of an ongoing call to another base station. As a result, interference by a wave transmitted from the base station to another mobile station can be suppressed, unlike the conventional method using a fixed transmission power control range. This upgrades the transmission power control accuracy. In case the local station is traveling into a strong field, a sudden decrease in transmission power of the base station can be realized by extending the transmission power control range of the transmission power control bit in the processing of step S212. As a result, interference by a wave transmitted from the base station to another mobile station can be suppressed, unlike the conventional method using a fixed transmission power control range. This upgrades the transmission power control accuracy.

By changing the transmission power control range via the aforementioned processing, response to a sudden change in reception power, response to a desired power in a short period and suppression of interference waves are made possible and errors in transmission power control can be reduced in any communication state. This upgrades accuracy of transmission power control.

Next, the mobile station determines the transmission power control bit based on the reception power of a received wave or desired wave from the base station (S201), inserts the transmission power control bit instructing the transmission power control range changed in step S212 in a transmission signal, and transmits this signal to the base station. The base station receives the signal from the mobile station, extracts the transmission power control bit from the received signal (S106) and controls the transmission power of the base station according to the instruction in the transmission power control bit (S113).

Processing of step S102 through S121 is the same as the aforementioned step S202 through S221 for a mobile station. The processing allows, same as the aforementioned mobile station, response to a sudden change in reception power, response to a desired power in a short period and suppression of interference waves are made possible and errors in transmission power control can be reduced in any communication state. This upgrades accuracy of transmission power control.

As mentioned earlier, this embodiment allows easy response to a sudden change in reception power, etc. while high-accuracy transmission power control is being made, by changing, the transmission power control range corresponding to the transmission power control bit depending on the communication state, thus ensuring a high-accuracy transmission power control in any communication state. This upgrades the overall accuracy of transmission power control. The upgrading of accuracy of transmission power control in a base station and a mobile station can minimize the required transmission power and realizes low-power, compact-size apparatus.

### INDUSTRIAL APPLICABILITY

As mentioned above, according to the invention, when transmission power of a local station is controlled by using the transmission power control bit transmitted from a distant station to the local station, the communication state is detected based on the reception power of a signal transmitted from the distant station. By changing the transmission power control range corresponding to the transmission power control bit based on the detected communication state, to be more precise, at least one of a change in reception power in the local station, a change in transmission power in a distant station, the control state of the local station, a change in transmission power in the local station, and a change in the transmission power control bit, the accuracy of transmission power control can be upgraded. This also can realizes low-power, compact-size apparatus.

## Claims

1. Radio communications apparatus having a transmission power control feature for controlling the transmission power of a local station by using the transmission power control bit transmitted from a distant station to the local station, comprising:
communication state detector which detects the communication state based on the reception power of a receive signal transmitted from the distant station; and
transmission power control range changer (18) which changes the transmission power control range corresponding to the transmission power control bit based on the detected communication state,
**characterized in that** said communication state detector further comprises a distant station transmission power change detector (23) which detects a change in transmission power in a distant station.

2. The radio communications apparatus according to claim1, wherein said communication state detector has a reception power change detector (21) which detects a change in reception power in a local station.

3. The radio communications apparatus according to claim1, wherein said communication state detector has a control state detector (20) which detects the control state of the local station.

4. The radio communications apparatus according to claim 1, wherein said communication state detector has a local station transmission power change detector (19) which detects a change in transmission power in the local station.

5. The radio communications apparatus according to claim 1, wherein said, communication state detector has a transmission power control bit change detector (22) which detects a change in said transmission power control bit.

6. The radio communications apparatus according to claim 2, wherein said reception power change detector has a reception power comparator (24) which compares a previous reception power with a current reception power.

7. The radio communications apparatus according to claim 2, wherein said reception power change detector has a fading pitch detector (25) which detects the fading pitch of reception power.

8. The radio communications apparatus according to claim 2, wherein said reception power change detector has a reception power threshold comparator (26) which compares the reception power with a predetermined threshold.

9. A transmission power control method for radio communications apparatus for controlling transmission. power of a local station by using a transmission power control bit transmitted from a distant station to the local station, comprising:
a communication state detecting step which detects the communication state based on the reception power of a received signal transmitted from the distant station; and
transmission power control range changing step (S112, S212) which changes the transmission power control range corresponding to the transmission power control bit based on the detected communication state,
**characterized in that** said communication state detecting step has a distant station transmission power change detecting step (S116, S216) which detects a change in transmission power in a distant station, and
said transmission power control range changing step changes the transmission power control range depending on the detected change in transmission power in the distant station.

10. The transmission power control method for radio communications apparatus according to claim 9
wherein said communication state detecting step has a reception power change detecting step (S110, S210) which detects a change in reception power in a local station,
wherein said transmission power control range changing step changes the transmission power control range depending on the detected change in reception power.

11. The transmission power control method for radio communications apparatus according to claim 9,
wherein said communication state detecting step has a control state detecting step (S102, S202) which detects the control state of a local station,
wherein said transmission power control range changing step changes the transmission power control range depending on the detected control state.

12. A transmission power control method for radio communications apparatus according to claim 9,
wherein said communication state detecting step has a local station transmission power change detecting step (S121,S221) which detects a change in transmission power in a local station and a transmission power control bit change detecting step (S111, S211) which detects a change in the transmission power control bit,
wherein said transmission power control range changing step changes the transmission power control range depending on the detected change in transmission power in the local station and the detected change in the transmission power control bit.

13. The transmission power control method for radio communications apparatus according to claim 10,
wherein said reception power change detecting step has a reception power comparing step (S105, S205) which compares a previous reception power with a current reception power;
wherein a change in reception power is detected based on the comparison results of the reception power comparing step.

14. The transmission power control method for radio communications apparatus according to claim 10,
wherein said reception power change detecting step has a fading pitch detecting step (S104, S204) which detects the fading pitch of reception power,
wherein a change in reception power is detected based on the detected fading pitch.

15. The transmission power control method for radio communications apparatus according to claim 10,
wherein said reception power change detecting step has a reception power comparing step (S105, S205) which compares a previous reception power with a current reception power and a fading pitch detecting step (S104, S204) for detecting the fading pitch of reception power,
wherein a change in reception power is detected based on the comparison results of the reception power comparing step and the detected fading pitch.

16. A transmission power control method for radio communications apparatus according to claim 10,
wherein said reception power change detecting step has a reception power threshold comparing step (S103, S203) which compares the reception power with a predetermined threshold,
wherein a change in reception power is detected based on the comparison results of the reception power threshold comparing step.

17. A computer-readable recording medium storing a program for executing the transmission power control method for the radio communications apparatus according to any one of claims 9 through 16 when executed by a processor.

## Patentansprüche

1. Funkkommunikationsvorrichtung mit einer Sendeleistungs-Steuereinrichtung zum Steuern der Sendeleistung einer lokalen Station unter Verwendung des Sendeleistungs-Steuerbits, das von einer entfernten Station zu der lokalen Station gesendet wird, wobei die Vorrichtung umfasst:
eine Kommunikationsstatus-Erfassungseinrichtung, die den Kommunikationsstatus auf Basis der Empfangsleistung eines empfangenen Signals erfasst, das von der entfernten Station gesendet wird; und
eine Einrichtung (18) zum Ändern des Sendeleistungs-Steuerbereiches, die den Sendeleistungs-Steuerbereich entsprechend dem Sendeleistungs-Steuerbit auf Basis des erfassten Kommunikationsstatus ändert,
**dadurch gekennzeichnet, dass** die Kommunikationsstatus-Erfassungseinrichtung eine Einrichtung (23) zum Erfassen von Änderung der Sendeleistung einer entfernten Station umfasst, die eine Änderung der Sendeleistung einer entfernten Station erfasst.

2. Funkkommunikationsvorrichtung nach Anspruch 1, wobei die Kommunikationsstatus-Erfassungseinrichtung eine Einrichtung (21) zum Erfassen von Änderung der Empfangsleistung aufweist, die eine Änderung der Empfangsleistung einer lokalen Station erfasst.

3. Funkkommunikationsvorrichtung nach Anspruch 1, wobei die Kommunikationsstatus-Erfassungseinrichtung eine Steuerstatus-Erfassungseinrichtung (20) aufweist, die den Steuerstatus der lokalen Station erfasst.

4. Funkkommunikationsvorrichtung nach Anspruch 1, wobei die Kommunikationsstatus-Erfassungseinrichtung eine Einrichtung (19) zum Erfassen von Änderung der Sendeleistung einer lokalen Station aufweist, die eine Änderung der Sendeleistung der lokalen Station erfasst.

5. Funkkommunikationsvorrichtung nach Anspruch 1, wobei die Kommunikationsstatus-Erfassungseinrichtung eine Einrichtung (22) zum Erfassen von Änderung des Sendeleistungs-Steuerbits aufweist, die eine Änderung des Sendeleistungs-Steuerbits erfasst.

6. Funkkommunikationsvorrichtung nach Anspruch 2, wobei die Einrichtung zum Erfassen von Änderung der Empfangsleistung eine Einrichtung (24) zum Vergleichen von Empfangsleistung aufweist, die eine vorhergehende Empfangsleistung mit einer aktuellen Empfangsleistung vergleicht.

7. Funkkommunikationsvorrichtung nach Anspruch 2, wobei die Einrichtung zum Erfassen von Änderung der Empfangsleistung eine Einrichtung (25) zum Erfassen des Fading-Abstandes (fading pitch) aufweist, die den Fading-Abstand der Empfangsleistung erfasst.

8. Funkkommunikationsvorrichtung nach Anspruch 2, wobei die Einrichtung zum Erfassen von Änderung der Empfangsleistung eine Einrichtung (26) zum Vergleichen von Empfangsleistung und Schwellenwert aufweist, die die Empfangsleistung mit einem vorgegebenen Schwellenwert vergleicht.

9. Verfahren zum Steuern von Sendeleistung für eine Funkkommunikationsvorrichtung, mit dem Sendeleistung einer lokalen Station unter Verwendung eines Sendeleistungs-Steuerbits gesteuert wird, das von einer entfernten Station zu der lokalen Station gesendet wird, wobei das Verfahren umfasst:
einen Schritt des Erfassens des Kommunikationsstatus, mit dem der Kommunikationsstatus auf Basis der Empfangsleistung eines empfangenen Signals erfasst wird, das von der entfernten Station gesendet wird; und
einen Schritt des Änderns des Sendeleistungs-Steuerbereiches, mit dem der Sendeleistungs-Steuerbereich entsprechend dem Sendeleistungs-Steuerbit auf Basis des erfassten Kommunikationsstatus geändert wird,
**dadurch gekennzeichnet, dass** der Schritt zum Erfassen des Kommunikationsstatus einen Schritt (S116, S216) zum Erfassen von Änderung der Sendeleistung einer entfernten Station aufweist, mit dem eine Änderung der Sendeleistung einer entfernten Station erfasst wird, und
mit dem Schritt zum Ändern des Sendeleistungs-Steuerbereichs der Sendeleistungs-Steuerbereich in Abhängigkeit von der erfassten Änderung der Sendeleistung der entfernten Station geändert wird.

10. Verfahren zum Steuern von Sendeleistung für eine Funkkommunikationsvorrichtung nach Anspruch 9,
wobei der Schritt zum Erfassen des Kommunikationsstatus einen Schritt (S110, S210) zum Erfassen von Änderung der Empfangsleistung aufweist, mit dem eine Änderung der Empfangsleistung einer lokalen Station erfasst wird,
wobei mit dem Schritt des Änderns des Sendeleistungs-Steuerbereiches der Sendeleistungs-Steuerbereich in Abhängigkeit von der erfassten Änderung der Empfangsleistung geändert wird.

11. Verfahren zum Steuern von Sendeleistung für eine Funkkommunikationsvorrichtung nach Anspruch 9,
wobei der Schritt zum Erfassen des Kommunikationsstatus einen Schritt (S102, S202) zum Erfassen des Steuerstatus aufweist, mit dem der Steuerstatus einer lokalen Station erfasst wird,
wobei mit dem Schritt zum Ändern des Sendeleistungs-Steuerbereiches der Sendeleistungs-Steuerbereich in Abhängigkeit von dem erfassten Steuerstatus geändert wird.

12. Verfahren zum Steuern von Sendeleistung für eine Funkkommunikationsvorrichtung nach Anspruch 9,
wobei der Schritt zum Erfassen des Kommunikationsstatus einen Schritt (S121, S221) zum Erfassen von Änderung der Sendeleistung einer lokalen Station, mit dem eine Änderung der Sendeleistung einer lokalen Station erfasst wird, sowie einen Schritt (S111, S211) zum Erfassen von Änderung des Sendeleistungs-Steuerbits aufweist, mit dem eine Änderung des Sendeleistungs-Steuerbits erfasst wird,
wobei mit dem Schritt zum Ändern des Sendeleistungs-Steuerbereiches der Sendeleistungs-Steuerbereich in Abhängigkeit von der erfassten Änderung der Sendeleistung der lokalen Station und der erfassten Änderung des Sendeleistungs-Steuerbits geändert wird.

13. Verfahren zum Steuern von Sendeleistung für eine Funkkommunikationsvorrichtung nach Anspruch 10,
wobei der Schritt zum Erfassen von Änderung der Empfangsleistung einen Schritt (S105, S205) zum Vergleichen von Empfangsleistung aufweist, mit dem eine vorhergehende Empfangsleistung mit einer aktuellen Empfangsleistung verglichen wird;
wobei eine Änderung der Empfangsleistung, auf Basis der Vergleichsergebnisse des Schrittes zum Vergleichen von Empfangsleistung erfasst wird.

14. Verfahren zum Steuern von Sendeleistung für eine Funkkommunikationsvorrichtung nach Anspruch 10,
wobei der Schritt zum Erfassen von Änderung der Empfangsleistung einen Schritt (S104, S204) zum Erfassen des Fading-Abstandes (fading pitch) aufweist, mit dem der Fading-Abstand von Empfangsleistung erfasst wird,
wobei eine Änderung der Empfangsleistung auf Basis des erfassten Fading-Abstandes erfasst wird.

15. Verfahren zum Steuern von Sendeleistung für eine Funkkommunikationsvorrichtung nach Anspruch 10,
wobei der Schritt zum Erfassen von Änderung der Empfangsleistung einen Schritt (S105, S205) zum Vergleichen der Empfangsleistung, mit dem eine vorhergehende Empfangsleistung mit einer aktuellen Empfangsleistung verglichen wird, sowie einen Schritt (S104, S204) zum Erfassen des Fading-Abstandes aufweist, mit dem der Fading-Abstand von Empfangsleistung erfasst wird,
wobei eine Änderung der Empfangsleistung auf Basis der Vergleichsergebnisse des Schrittes zum Vergleichen von Empfangsleistung und des erfassten Fading-Abstandes erfasst wird.

16. Verfahren zum Steuern von Sendeleistung für eine Funkkommunikationsvorrichtung nach Anspruch 10,
wobei der Schritt zum Erfassen von Änderung der Empfangsleistung einen Schritt (S109, S203) zum Vergleichen von Empfangsleistung und Schwellenwert aufweist, mit dem die Empfangsleistung mit einem vorgegebenen Schwellenwert verglichen wird,
wobei eine Änderung der Empfangsleistung auf Basis der Vergleichsergebnisse des Schrittes zum Vergleichen von Empfangsleistung und Schwellenwert erfasst wird.

17. Computerlesbares Aufzeichnungsmedium, das ein Programm speichert, durch das das Verfahren zum Steuern von Sendeleistung für die Funkkommunikationsvorrichtung nach einem der Ansprüche 9 bis 16 ausgeführt wird, wenn es durch einen Prozessor ausgeführt wird.

## Revendications

1. Appareil de radiocommunication ayant une fonction de commande de la puissance de transmission pour commander la puissance de transmission d'une station locale en utilisant le bit de commande de la puissance de transmission émis d'une station distante vers la station locale, comprenant:
un détecteur d'état de communication qui détecte l'état de communication sur la base de la puissance de réception d'un signal reçu émis depuis la station distante; et
un changeur (18) de la gamme de commande de la puissance de transmission qui change la gamme de commande de la puissance de transmission correspondant au bit de commande de la puissance de transmission sur la base de l'état de communication détecté.
**caractérisé en ce que** ledit détecteur d'état de communication comprend en plus un détecteur (23) de changement de la puissance de transmission d'une station distante qui détecte un changement de la puissance de transmission dans une station distante.

2. Appareil de radiocommunication selon la revendication 1, dans lequel ledit détecteur d'état de communication dispose d'un détecteur (21) de changement de la puissance de réception qui détecte un changement de la puissance de réception dans une station locale.

3. Appareil de radiocommunication selon la revendication 1, dans lequel ledit détecteur d'état de communication dispose d'un détecteur (20) de l'état de commande qui détecte l'état de commande de la station locale.

4. Appareil de radiocommunication selon la revendication 1, dans lequel ledit détecteur de l'état de communication dispose d'un détecteur (19) de changement de la puissance de transmission de station locale qui détecte un changement de la puissance de transmission dans la station locale.

5. Appareil de radiocommunication selon la revendication 1, dans lequel ledit détecteur de l'état de communication dispose d'un détecteur (22) de changement du bit de commande de la puissance de transmission qui détecte un changement au niveau dudit bit de commande de la puissance de transmission.

6. Appareil de radiocommunication selon la revendication 2, dans lequel ledit détecteur de changement de la puissance de réception dispose d'un comparateur (24) de la puissance de réception qui compare une puissance de réception précédente à une puissance de réception actuelle.

7. Appareil de radiocommunication selon la revendication 2, dans lequel ledit détecteur de changement de la puissance de réception dispose d'un détecteur (25) de pas d'évanouissement qui détecte le pas d'évanouissement de la puissance de réception.

8. Appareil de radiocommunication selon la revendication 2, dans lequel ledit détecteur de changement de la puissance de réception dispose d'un comparateur (26) seuil-puissance de réception qui compare la puissance de réception à un seuil prédéterminé.

9. Procédé de commande de puissance de transmission pour un appareil de radiocommunication pour commander la puissance de transmission d'une station locale en utilisant un bit de commande de la puissance de transmission émis d'une station distante vers la station locale, comprenant:
une étape de détection de l'état de communication qui détecte l'état de communication selon la puissance de réception d'un signal reçu émis depuis la station distante; et
une étape (S112, S212) de changement de la gamme de commande de la puissance de transmission qui change la gamme de commande de la puissance de transmission correspondant au bit de commande de la puissance de transmission selon l'état de communication détecté,
**caractérisé en ce que** ladite étape de détection de l'état de communication comprend une étape (S116, S216) de détection du changement de la puissance de transmission d'une station distante qui détecte un changement de la puissance de transmission dans une station distante, et
ladite étape de changement de la gamme de commande de la puissance de transmission change la gamme de commande de la puissance de transmission en fonction du changement détecté dans la puissance de transmission dans la station distante.

10. Procédé de commande de puissance de transmission pour un appareil de radiocommunication selon la revendication 9
dans lequel ladite étape de détection de l'état de communication comprend une étape (S110, S210) de détection du changement de la puissance de réception qui détecte un changement dans la puissance de réception dans une station locale,
dans lequel ladite étape de changement de la gamme de commande de la puissance de transmission change la gamme de commande de la puissance de transmission en fonction du changement détecté dans la puissance de réception.

11. Procédé de commande de puissance de transmission pour un appareil de radiocommunication selon la revendication 9,
dans lequel ladite étape de détection de l'état de communication comprend une étape (S102, S202) de détection de l'état de commande qui détecte l'état de commande d'une station locale,
dans lequel ladite étape de changement de la gamme de commande de la puissance de transmission change la gamme de commande de la puissance de transmission en fonction de l'état de commande détecté.

12. Procédé de commande de puissance de transmission pour un appareil de radiocommunication selon la revendication 9,
dans lequel ladite étape de détection de l'état de communication comprend une étape (S121, S221) de détection du changement de la puissance de transmission d'une station locale qui détecte un changement dans la puissance de transmission dans une station locale et une étape (S111, S211) de détection du changement du bit de commande de la puissance de transmission qui détecte un changement au niveau du bit de commande de la puissance de transmission,
dans lequel ladite étape de changement de la gamme de commande de la puissance de transmission change la gamme de commande de la puissance de transmission en fonction du changement détecté dans la puissance de transmission dans la station locale et du changement détecté au niveau du bit de commande de la puissance de transmission.

13. Procédé de commande de puissance de transmission pour un appareil de radiocommunication selon la revendication 10,
dans lequel ladite étape de détection du changement de la puissance de réception comprend une étape (S105, S205) de comparaison de la puissance de réception qui compare une puissance de réception précédente à une puissance de réception actuelle,
dans lequel un changement dans la puissance de réception est détecté sur la base des résultats de comparaison de l'étape de comparaison de la puissance de réception.

14. Procédé de commande de puissance de transmission pour un appareil de radiocommunication selon la revendication 10,
dans lequel ladite étape de détection du changement de la puissance de réception comprend une étape (S104, S204) de détection du pas d'évanouissement qui détecte le pas d'évanouissement de la puissance de réception,
dans lequel un changement dans la puissance de réception est détecté sur la base du pas d'évanouissement détecté.

15. Procédé de commande de puissance de transmission pour un appareil de radiocommunication selon la revendication 10,
dans lequel ladite étape de détection du changement de la puissance de réception comprend une étape (S 105, S205) de comparaison de la puissance de réception qui compare une puissance de réception précédente à une puissance de réception actuelle et une étape (S104, S204) de détection du pas d'évanouissement pour détecter le pas d'évanouissement de la puissance de réception,
dans lequel un changement dans la puissance de réception est détecté sur la base des résultats de comparaison de l'étape de comparaison de la puissance de réception et du pas d'évanouissement détecté.

16. Procédé de commande de puissance de transmission pour un appareil de radiocommunication selon la revendication 10,
dans lequel ladite étape de détection du changement de la puissance de réception comprend une étape (S103, S203) de comparaison seuil-puissance de réception qui compare la puissance de réception à un seuil prédéterminé,
dans lequel un changement dans la puissance de réception est détecté sur la base des résultats de comparaison de l'étape de comparaison seuil-puissance de réception.

17. Support d'enregistrement lisible par ordinateur stockant un programme pour exécuter le procédé de commande de la puissance de transmission pour l'appareil de radiocommunication selon l'une quelconque des revendications 9 à 16 lorsqu'il est exécuté par un processeur.
